# EUROPÄISCHE PATENTSCHRIFT

(11) **EP 2 683 058 B1**
(45) Veröffentlichungstag und Bekanntmachung des Hinweises auf die Patenterteilung: **05.06.2019**
(21) Anmeldenummer: 13164684.6
(22) Anmeldetag: 22.04.2013
(51) Int. Cl.: H02J 3/14, H02J 9/00, H02J 7/34, H05B 37/02

(54) **Vorrichtung zum sensorgesteuerten Aktivieren einer elektrischen Last**
Device for the sensor-controlled activation of an electric load
Dispositif d'activation commandée par capteur d'une charge électrique

(30) Priorität: 05.07.2012 DE 202012102495 U
(43) Veröffentlichungstag der Anmeldung: 08.01.2014
(73) Patentinhaber: Steinel GmbH, 33442 Herzebrock (DE)
(72) Erfinder: Eisele, Thomas, Dr., 52159 Roetgen-Rott (DE); Möller, Thomas, 32049 Herford (DE)

(56) Entgegenhaltungen:
- WO-A1-96/20369
- WO-A2-2007/090112
- US-A- 5 187 425
- US-A1- 2007 069 657

## Beschreibung

Die vorliegende Erfindung betrifft eine Vorrichtung zum sensorgesteuerten Aktivieren einer elektrischen Last an einem Zweidraht-Netzspannungsanschluss nach dem Oberbegriff des Hauptanspruchs.

Derartige Vorrichtungen, insbesondere in Form einer sogenannten Sensorleuchtenvorrichtung, sind allgemein bekannt und weisen eine typischerweise einen Infrarot- oder Hochfrequenz-Bewegungssensor aufweisende Sensoreinheit auf, welche als Reaktion auf eine detektierte Bewegung einer Person in einem Erfassungsbereich die als Leuchtmittel oder Leuchtmittelanordnung realisierte elektrische Last aktiviert.

Während derartige Vorrichtungen für verschiedenste Anschluss- und Einbauszenarien üblich und bekannt sind, bietet insbesondere der Einbau bzw. die Nachrüstung für einen Zweidraht-Netzspannungsanschluss, etwa in vorhandene Unterputz-Schalterdosen, das grundsätzliche Problem, dass das Sensormodul über den Laststromkreis betrieben werden muss, also keine last- und schaltzustandsunabhängige Stromversorgung des Sensormoduls möglich ist (an praktisch allen Unterputzschaltern liegen nur zwei Leitungen für die Installation, nämlich Phase sowie Nullleiter/Zuleitung zur Last).

Bei einer derartigen Konfiguration, bei welcher die Sensoreinheit zum gesteuerten Unterbrechen des Laststromkreises in diesen Laststromkreis eingeschleift ist, kann der im Laststromkreis fließende Strom (bei aktivierter Last, also nicht unterbrochenem Laststromkreis) zusätzlich genutzt werden, um die Sensoreinheit (eingeschlossen die darin vorgesehene Sensor-, Auswerte- und Treiberelektronik) zu betreiben. Wird allerdings die Last durch die Sensoreinheit ausgeschaltet (etwa nach dem Verstreichen einer typischerweise vorbestimmten Mindestdauer und keiner (weiteren) detektierten Bewegung), endet mit dem Unterbrechen nicht nur der Betrieb der elektrischen Last, sondern auch die Versorgung der Sensorreinheit.

Aus dem Stand der Technik ist es zur Lösung dieses Problems prinzipiell möglich, in der Art einer Halbautomatik bei ausgeschalteter Last keine Funktion der Sensoreinheit vorzusehen, mit anderen Worten, es muss immer ein manuelles Aktivieren der Last erfolgen, woraufhin dann das Ausschalten sensorgesteuert erfolgt, nämlich dann, wenn keine Bewegung detektiert wird. Im praktischen Betrieb führt dies jedoch zu Nachteilen im Bedienungskomfort.

Als weitere mögliche Lösung ist es denkbar, zu jedem Zeitpunkt, also auch bei deaktivierter elektrischer Last, einen (geringen) Strom durch die Reihenschaltung aus Sensoreinheit und Last fließen zu lassen, wodurch die Sensoreinheit sowie die zugehörige Elektronik versorgt wird. Während ein derartiger Ansatz etwa beim Einsatz von ohm'schen Lasten (wie etwa Glühlampen als Leuchtmittel) sinnvoll ist und in der erwarteten Weise für ein Sensor-Dauerbetrieb funktioniert, bewirkt der geringe Stromfluss jedoch nachteilige Effekte bei nicht-ohm'schen Leuchtmitteln wie etwa Kompaktleuchtstofflampen, Leuchtdioden, Leuchtmitteln o.dgl. Aggregaten, welche typischerweise über ein elektronisches Vorschaltgerät (EVG) betrieben werden, in Form von Flackern, Blitzen, Glimmen o.dgl. nachteiligen Effekten, welche neben ihrer unerwünschten optischen Wirkung sich auch nachteilig auf eine Lebensdauer der Leuchtmittel auswirken. Auch ist eine solche Lösung bei Sensoren mit hohem Strombedarf nur eingeschränkt tauglich.

Zwar wäre es prinzipiell denkbar, der Sensoreinheit Energiespeichermittel in Form einer Puffereinheit (z.B. eines Kondensators o.dgl.) zuzuordnen, welche über einen einer elektrischen Kapazität eines solchen Energiepuffers entsprechenden Ausschaltzeitraum einen Betrieb der Sensoreinheit bei unterbrochenem Laststromkreis sicherstellen kann, jedoch ist auch bei einer solchen Maßnahme, gerade bei längeren Ausschaltperioden, ein zuverlässiger Sensor-Einschaltbetrieb durch die Sensoreinheit nicht gewährleistet (weil dann nämlich ein entsprechender Puffer als Energiespeichermittel entladen ist und eine weitere Funktionsfähigkeit der Sensoreinheit nicht sicherstellen kann).

Aufgabe der vorliegenden Erfindung ist es daher, eine gattungsgemäße Vorrichtung zum sensorgesteuerten Aktivieren einer elektrischen Last an einem Zweidraht-Netzspannungsanschluss im Hinblick auf ihre Sensorfunktionalität für das Aktivieren (und Deaktivieren) der Last auch bei unvorhersehbar langen Ausschaltperioden sicherzustellen, dabei einen Stromfluss im Laststromkreis bei deaktivierter elektrischer Last zu verhindern und insbesondere eine solche Vorrichtung tauglich zu machen für einen Einbau oder eine Nachrüstung an einem Zweidraht-Netzspannungsanschluss, welcher im Rahmen der vorliegenden Erfindung als Phase und Last-/Nullleiteranschluss definiert sein soll.

Die Aufgabe wird durch die Vorrichtung mit den Merkmalen des Hauptanspruchs gelöst; vorteilhafte Weiterbildungen der Erfindung sind in den Unteransprüchen beschrieben.

In erfindungsgemäß vorteilhafter Weise ist der im Laststromkreis in Reihe mit der elektrischen Last vorgesehenen Sensoreinheit nicht nur eine Speicher- bzw. Puffereinheit für einen Sensorbetrieb auch im unterbrochenen Zustand des Laststromkreises in Form der Energiespeichermittel zugeordnet, vielmehr wird über die erfindungsgemäß den Energiespeichermitteln zugeordnete Ladeinheit in adaptiver Weise während des Betriebszustands und abhängig von einem Ladezustand der Energiespeichermittel der Ladebetrieb so durchgeführt, dass unabhängig von der Länge einer Ausschaltperiode eine für den Betrieb der Sensoreinheit notwendige Mindestladung vorhanden ist.

Erfindungsgemäß erreicht wird dies durch die den Energiespeichermitteln zugeordnete Steuereinheit dadurch, dass als Reaktion auf einen vorbestimmten elektrischen Ladezustand, insbesondere das Erreichen bzw. Unterschreiten (mindestens) eines Ladezustandschwellwerts, eine Aktivierung der Last durchgeführt wird (also etwa die Leuchtmittel aktiviert werden, selbst wenn keine Bewegungsdetektion oder dergleichen Erfassungs- oder Detektionssignal der Sensoreinheit vorliegt) lediglich mit dem Zweck, durch diese Aktivierung und das damit erfolgende Schließen des Laststromkreises eine erneute Ladung und damit eine Erhöhung der gespeicherten Energie zu bewirken.

Ergänzend oder alternativ, wiederum als Reaktion auf das Erreichen (bzw. Unterschreiten) eines Ladezustandschwellwerts der Energiespeichermittel, ist es erfindungsgemäß vorgesehen, dass die Steuereinheit die Mindestdauer des Aktivierungszustands beeinflusst, insbesondere verlängert, wodurch etwa bei einem durch einen Ladezustandschwellwert angezeigten niedrigen gespeicherten Energiegehalt dann die entsprechend verlängerte Mindestdauer des Aktivierungszustands der Last (bei einer zukünftigen Aktivierung) kompensierend zusätzlichen Ladestrom bereitstellt, ergänzend oder alternativ zu dieser Maßnahme ein aus dem im geschlossenen Laststromkreis fließenden Strom ein höherer Teilstrom für die Ladung der Energiespeichermittel abgezweigt wird.

Damit entsteht durch die vorliegende Erfindung ein selbststeuerndes und sich selbst (im Hinblick auf die Steuerfunktionalität) mit ausreichender Energie aus dem Laststromkreis versorgendes System, welches durch die Überwachung mittels Funktionalität der Steuereinheit (Überwachen der Energiespeichermittel auf das Erreichen des mindestens einen vorbestimmten elektrischen Energiezustands) und das nachfolgende Auslösen einer das Laden ermöglichenden bzw. verstärkenden Maßnahme, für eine dauerhafte Betriebssicherheit der Vorrichtung sorgt.

In der konkreten Realisierung ist es dabei besonders bevorzugt, den vorbestimmten elektrischen Ladezustand in Form von mindestens zwei unterschiedlichen Ladezustandsschwellwerten zu realisieren, wobei weiter bevorzugt ein erster, oberer der Ladezustandsschwellwerte Auslöser für eine verstärkte bzw. erhöhte Ladung der Energiespeichermittel bei einer nachfolgenden (Sensor-) Aktivierung sein kann, wie etwa das Verlängern der Mindesteinschaltdauer (Mindestdauer des Aktivierungszustands) oder eines erhöhten Ladestroms, während ein zweiter (niedrigerer) der Ladezustandschwellwerte, zum Erzwingen eines sofortigen Ladebetriebs für einen Ladezeitraum, die Last aktivieren und damit den Laststromkreis schließen kann.

Wiederum in der vorteilhaften Weiterbildung ist es bevorzugt, in diesem Betriebsmodus der Lastaktivierung als Reaktion auf den vorbestimmten elektrischen Ladezustand (d.h. das Erreichen oder Unterschreiten einer typischerweise kritischen niedrigen Ladezustandsschwelle) eine vorbestimmte Mindesteinschaltzeit (Aktivierungszeit) vorzusehen, um insoweit wiederum eine vorbestimmte Energiemindestmenge den Energiespeichermitteln zuzuführen. Zusätzlich vorteilhaft ist es, in diesem Betriebsmodus (welcher ja nicht primär der Lastaktivierung zu Beleuchtungszwecken, sondern zum Ermöglichen des Ladens dient) das Stromteilerverhältnis zum Erreichen eines möglichst starken Ladestroms einzurichten.

In der schaltungstechnischen Umsetzung bevorzugter Weiterbildungen der Erfindung ist es dabei besonders bevorzugt, die zum gesteuerten Unterbrechen des Laststromkreises ausgebildete Sensoreinheit mit einem elektronischen Schalter in Form eines Triac, MOSFET od. dgl. (Halbleiter-) Schaltelements zu versehen; zusätzlich vorteilhaft und weiterbildend gibt dies die Möglichkeit, in der Art einer Phasenanschnittsteuerung und entsprechend einem vorbestimmten (kleinen) Phasenwinkel der Netzspannung als Spannung an den elektronischen Schaltermitteln den Teilstrom zum Laden der Energiespeichermittel zu gewinnen.

Dagegen ist es gemäß einer bevorzugten Weiterbildung möglich und sinnvoll, die erfindungsgemäße Steuereinheit mittels eines Mikroprozessors oder eines Mikrocontrollers zu realisieren, wobei insbesondere deren Programmierbarkeit dann auf einfache Weise die beschriebene adaptive Funktionalität der vorliegenden Erfindung umsetzt und ggf. die Möglichkeit für zusätzlich weiterbildende Funktionalitäten anbietet.

Während die vorliegende Erfindung insbesondere auf den Kontext einer Anwesenheits- bzw. Bewegungsdetektion für die Sensoreinheit geeignet ist, wobei dort insbesondere dann in ansonsten bekannter Weise Infrarot- oder Hochfrequenzsensoren Einsatz finden, ist die vorliegende Erfindung hierauf ebenso wenig beschränkt, wie etwa die elektrische Last auf Leuchtmittel oder Anordnung von Leuchtmitteln (welche weiter bevorzugt nicht-ohm'sche Leuchtmittel sind, insbesondere jedoch nicht beschränkt auf Entladungs-Leuchtmittel bzw. mit einer Mehrzahl von LEDs realisierte Leuchtmittel).

Im Ergebnis gestattet es die vorliegende Erfindung in überraschend einfacher und betriebssicherer Weise, das systeminhärente Problem von Lastaktivierungsvorrichtungen zu lösen, bei welchen die Sensoreinheit in den Laststromkreis eingeschleift ist. In der vorstehend beschriebenen und den nachfolgenden Ausführungsbeispielen zu entnehmender Weise ermöglicht die vorliegende Erfindung insbesondere eine intelligent-adaptive Ladung der Energiespeichermittel, abhängig von jeweils wahrgenommenem Energiebedarf und unter Beeinflussung des Aktivierungserhaltens der Last, so dass sichergestellt ist, dass unabhängig von einer tatsächlichen Nicht-Erfassungsdauer der Sensoreinheit ein kontinuierlicher, ununterbrochener Sensorbetrieb gewährleistet ist.

Weitere Vorteile, Merkmale und Einzelheiten der Erfindung ergeben sich aus der nachfolgenden Beschreibung bevorzugter Ausführungsbeispiele sowie anhand der Figuren; diese zeigen:
- Fig. 1: ein schematisches Blockschaltbild mit wesentlichen Funktionskomponenten eines bevorzugten Ausführungsbeispiels der vorliegenden Erfindung und
- Fig. 2: ein Flussdiagramm zum Verdeutlichen eines Betriebs der Ausführungsform gemäß Fig. 1.

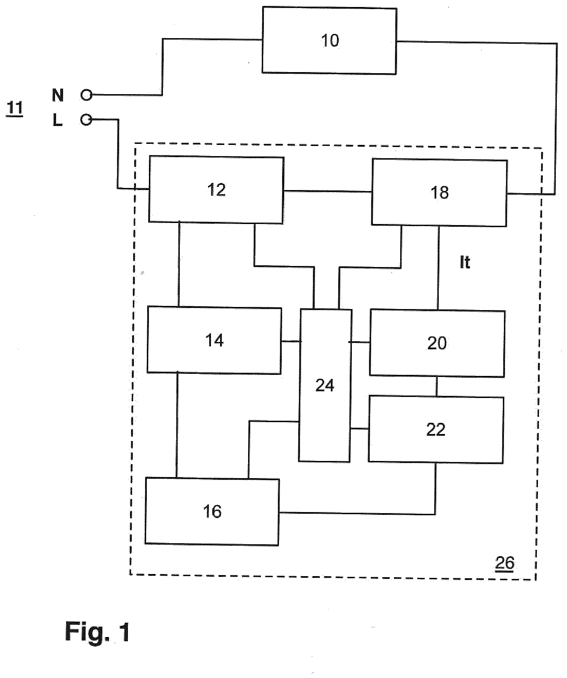

Die Fig. 1 zeigt als Blockschaltbild die wesentlichen Funktionskomponenten der erfindungsgemäßen transformatorlosen Vorrichtung zum sensorgesteuerten Aktivieren einer elektrischen Last an einem Zweidraht-Netzspannungsanschluss 11 mit Phase L und Nullleiter N, wobei die im Beispiel als Entladungs-Leuchtmittel mit elektronischem Vorschaltgerät (EVG) realisierte Last 10 mit einer elektronischen Schaltereinheit 12 und einem Stromteiler 18 den Laststromkreis schließt. Die im vorliegenden Ausführungsbeispiel einen Triac aufweisende elektronische Schalteinheit 12 öffnet und schließt diesen Laststromkreis als Reaktion auf eine einen Bewegungssensor (typischerweise Infrarot-Bewegungssensor) aufweisende Sensoreinheit 14 sowie eine mittels einer geeignet programmierten Mikrocontrollereinheit realisierte Steuereinheit 24.

Die Sensoreinheit 14 wird von einer Energiespeichereinheit 16 mit Betriebsspannung versorgt, unabhängig von einem Stromfluss im Laststromkreis. Zu diesem Zweck weist die Energiespeichereinheit 16 (nicht gezeigte) Akkus auf, welche mit einer vorbestimmten Ladekapazität versehen sind und entsprechend dieser Ladekapazität zum Aufrechterhalten eines ununterbrochenen Sensorerfassungsbetriebs der Sensoreinheit 14 eingerichtet sind.

Ladestrom empfängt die Energiespeichereinheit 16 von einem vorgeschalteten Laderegler 22, welcher wiederum einen von der Stromteilereinheit 18 aus dem Laststromkreis fließenden Teilstrom Iₜ, geeignet durch Gleichrichtmittel 20, zugeführt bekommt.

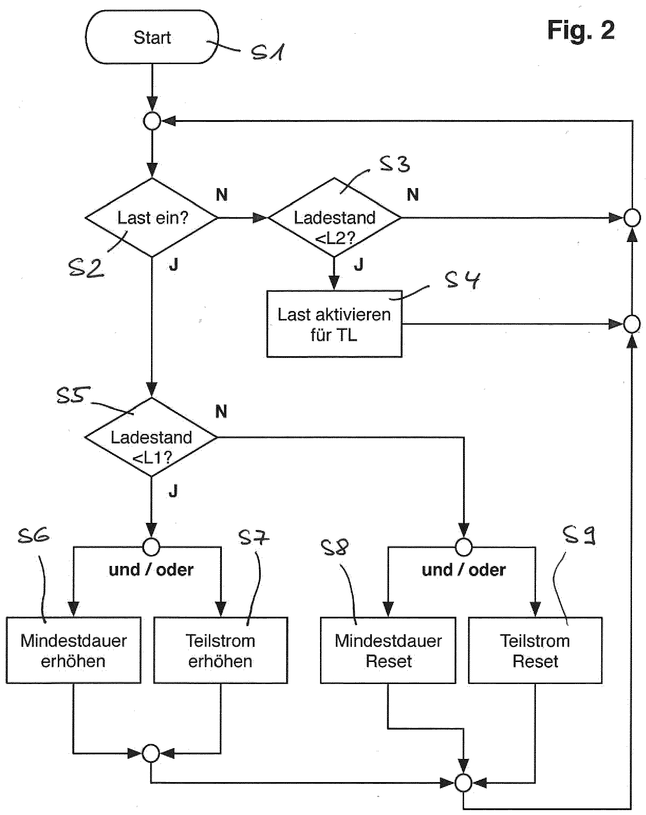

Die Steuereinheit 24 ist dabei so eingerichtet, dass in der nachfolgend im Zusammenhang mit der Fig. 2 zu beschreibenden Weise ein Ladungsbetrieb für die Energiespeichereinheit so durchgeführt werden kann, dass unabhängig von einem deaktivierten Zustand (Ausschaltzustand) der elektronischen Schalteinheit 12 und mithin der Last 10, also Stromfluss im Laststromkreis, ein für einen Betrieb der Sensoreinheit 14 ausreichender Ladezustand der Einheit 16 gewährleistet ist.

Erfindungsgemäß wird dies, wie das Ausführungsbeispiel der Fig. 2 verdeutlicht, durch das Abprüfen von zwei Ladezustandsschwellwerten L1 und L2 gewährleistet, wobei der Ladezustandsschwellwert L2 eine geringere gespeicherte Energie der Energiespeichereinheit 16 bedeutet, als der Ladezustandsschwellwert L1.

Die gestrichelte Linie 26 verdeutlicht diejenigen Funktionskomponenten, welche modulartig als Einsatz für eine Schalterdose in einer Wand ausgebildet und modulartig realisiert sind.

Der Betrieb der in Fig. 1 gezeigten Vorrichtung gemäß Flussablaufdiagramm in Fig. 2 (welches gleichermaßen ein zur Erfindung gehöriges und beanspruchtes Verfahren zeigt) ist wie folgt:
Nach einem Start des Betriebs in Schritt S1 wird zunächst in Schritt S2 geprüft, ob die Last 10 sich im Aktivierungszustand befindet, also der Laststromkreis durch die elektronische Schaltereinheit 12 geschlossen ist.

Falls dies nicht der Fall ist, findet (geeignet periodisch und in regelmäßigen Abständen) in Schritt S3 eine Überprüfung durch die Steuereinheit 24 statt, ob die in der Speichereinheit 16 gespeicherte Energie die untere Ladezustandsschwelle L2 erreicht bzw. unterschritten hat. Falls dies der Fall ist, wird in einem nachfolgenden Schritt S4 durch Aktivierung der elektronischen Schaltereinheit 12 für einen vorbestimmten Zeitraum TL (entsprechend einer eine Mindestladung oberhalb L2 sicherstellenden Ladezeit) der Laststromkreis geschlossen, mit der Wirkung, dass über die Einheiten 18, 20, 22 eine Ladung des Energiespeichers 16 mindestens über den Zeitraum TL stattfindet. Dabei ist es im Rahmen der Erfindung günstig und bevorzugt, für diesen zwangsweise eingeleiteten Aktivierungszustand (welcher nicht durch eine detektierte Bewegung der Sensoreinheit 14, sondern lediglich durch die Notwendigkeit des Aufladens der Energiespeichereinheit 16 motiviert ist) einen geeigneten Ladestrom vorzugeben, welcher durch entsprechende Parametrisierung des Ladereglers 22 bzw. des Stromteilers 18 eine notwendige Lade-Einschaltdauer TL optimiert (z.B. minimiert).

Wird bei aktivierter Last (d.h. Entscheidung in Schritt S2 = J) im Schritt S5 festgestellt, dass der Ladezustand (elektrischer Energiegehalt) den Schwellwert L1 erreicht bzw. unter diesen gefallen ist, können in den entsprechend der Verzweigung J nachfolgenden Schritten S6 bzw. S7 Maßnahmen zur Erhöhung der eingetragenen Ladeenergie in die Energiespeichereinheit 16 getroffen werden, und zwar alternativ oder kumulativ dergestalt, dass in Schritt S6 eine Mindesteinschaltdauer der Last 10 erhöht wird (also derjenige Zeitraum, über welchen etwa das aufgrund einer Sensordetektion der Einheit 14 aktivierte Leuchtmittel mindestens eingeschaltet bleibt, auch ohne dass eine (weitere) Bewegung detektiert wird), ergänzend oder alternativ durch Einwirkung auf die Stromteilereinheit 18 dergestalt, dass ein entsprechend dem Ladestrom für die Einheit 16 erhöhendes Teilerverhältnis der Stromteilereinheit 18 zu einem erhöhten Teilstrom Iₜ führt. In der praktischen Umsetzung dieser Lösung würde etwa der Stromteiler realisiert werden durch einen Phasenanschnitt des im Laststromkreis fließenden Netzspannungssignals, wobei entsprechend der eingestellten Phase über der elektronischen Schaltereinheit 12 ein proportionaler Spannungsabfall entsteht, welcher Grundlage für den Teilerstrom 18 ist.

Wird dagegen im Schritt S5 festgestellt, dass das Ladestandsniveau L1 in der Energiespeichereinheit 16 überschritten ist, ist dies Anlass, in den Schritten S8 bzw. S9 (wiederum entsprechend den Schritten S6, S7) die vorgenommenen Erhöhungen an der Mindesteinschaltdauer (gemäß S6) bzw. an der Erhöhung des Teilerverhältnisses mithin der Erhöhung des Teilstroms (Schritt S7) auf einen Vorgabewert zurückzusetzen.

Wie die Fig. 2 diesbezüglich verdeutlicht, entsteht so ein geschlossenes Regelsystem, welches sich adaptiv an verschiedene Betriebs- und damit verbundene Ladungsverhältnisse anpasst und sicherstellt, dass zu keinem Zeitpunkt, selbst bei lang andauernden Deaktivierungszuständen der Last und mithin ohne Stromfluss im Laststromkreis, zumindest periodisch durch das zwangsweise Aktivieren der Last die für das Erhalten des Mindestladezustands L2 notwendige Ladung erhalten wird. Darüber findet dann eine Anpassung des Ladungsverhaltens in der im Ausführungsbeispiel beschriebenen Weise durch das adaptive Anpassen einer Mindest-Einschaltdauer als Reaktion auf die Sensordetektion und/oder die Anpassung des für einen Ladestrom maßgeblichen, in der Einheit 18 abgeteilten Stroms statt.

Die vorliegende Erfindung ist nicht auf diese prinzipielle Funktionalität sowie die in Fig. 1, Fig. 2 exemplarisch beschriebene Realisierung beschränkt. So ist es beispielsweise von der Erfindung umfasst, beliebige Lasten als Reaktion auf die Sensoreinheit 14 zu aktivieren; die Lasten sind dabei nicht auf (nicht-ohm'sche) Leuchtmittel mit EVGs beschränkt, sondern können beliebigen anderen Charakters sein, ebenso wie die Sensoreinheit 14, welche typischerweise als Infrarot- oder Radarsensor zur Bewegungsdetektion ausgebildet ist, auch beliebige andere Sensorfunktionalität, eingeschlossen etwa eine Anwesenheitsdetektion, eine Dämmerungsschaltung od. dgl., realisieren kann.

Gleichermaßen ist im Hinblick auf das Blockschaltbild der Fig. 1 die Energiespeichereinheit 16 nicht etwa auf einen Akku als Puffer bzw. konkretes Speicherelement beschränkt, vielmehr kann dies auch in Form einer elektronischen Kapazität, oder in Form anderer geeigneter elektronischer Komponenten realisiert sein.

Während zudem im vorbeschriebenen Ausführungsbeispiel die Schwellen L1 bzw. L2, welche im Rahmen der Erfindung geeignet erreicht bzw. unterschritten werden müssen, um in der beschriebenen Weise in das Ladeverhalten der Vorrichtung einzugreifen, statisch und vorbestimmt ausgebildet sind, ist es gleichwohl möglich und im Rahmen bevorzugter Weiterbildungen der Erfindung umfasst, diese Schwellen dynamisch festzulegen und etwa den Schwellwert L1 einem tatsächlich detektierten bzw. erfassten Speicherzustand nachzuführen. Insoweit würde dann im Zweig der Schritte S5 bis S9 in der Art einer kontinuierlichen Regelung ein konkret erfasster Ladezustand der Energiespeichereinheit 16 sich (z.B. proportional) auf die Mindestdauer der Aktivierung (Nachleuchtdauer) und/oder das Stromteilerverhältnis aufwirken.

## Patentansprüche

1. Vorrichtung zum sensorgesteuerten Aktivieren einer elektrischen Last (10) an einem Zweidraht-Netzspannungsanschluss (11), mit einer im Laststromkreis in Reihe mit der elektrischen Last vorgesehenen und zum gesteuerten Unterbrechen des Laststromkreises ausgebildeten Sensoreinheit (12, 14) sowie der Sensoreinheit zugeordneten, von der Netzspannung versorgten Netzteilmitteln (18, 20, 22), die Energiespeichermittel (16) für einen von einem Aktivierungszustand der elektrischen Last unabhängigen Betrieb der Sensoreinheit aufweisen,
wobei die Sensoreinheit zum Aktivieren der Last über eine Mindestdauer des Aktivierungszustands eingerichtet ist,
**dadurch gekennzeichnet, dass**
dem Laststromkreis Stromteilermittel (18) so zugeordnet sind, dass in dem Aktivierungszustand der Last ein Teilstrom (Iₜ) des Laststroms zum Laden der Energiespeichermittel an einer diesen zugeordneten Ladeeinheit (20, 22) anliegt, und eine den Energiespeichermitteln zugeordnete Steuereinheit (24) als Reaktion auf einen vorbestimmten elektrischen Ladezustand, insbesondere das Erreichen eines Ladezustandsschwellwerts (L1, L2), der Energiespeichermittel die Mindestdauer verlängern kann und/oder ein Stromteilerverhältnis der Stromteilermittel zum Verändern des Teilstroms verändern kann und/oder eine Aktivierung der Last durchführen kann.

2. Vorrichtung nach Anspruch 1, **dadurch gekennzeichnet, dass** die Steuereinheit so eingerichtet ist, dass das Verlängern der Mindestdauer und/oder das Verändern des Stromteilerverhältnisses als Reaktion auf das Erreichen eines ersten Ladezustandsschwellwerts (L1) und die Aktivierung der Last (10) als Reaktion auf das Erreichen eines zweiten, vom ersten Ladezustandsschwellwert verschiedenen Ladezustandsschwellwerts (L2) erfolgen kann.

3. Vorrichtung nach Anspruch 2, **dadurch gekennzeichnet, dass** der zweite Ladezustandsschwellwert einer niedrigeren, in den Energiespeichermitteln gespeicherten elektrischen Energie, bezogen auf den ersten Ladezustandsschwellwert, entspricht.

4. Vorrichtung nach einem der Ansprüche 1 bis 3, **dadurch gekennzeichnet, dass** die Steuereinheit (24) so eingerichtet ist, dass die Aktivierung der Last (10) als Reaktion auf den vorbestimmten elektrischen Ladezustand über eine vorbestimmte Ladezeit (T2) erfolgt, wobei während der Ladezeit ein vorbestimmtes, insbesondere konstantes Stromteilerverhältnis eingestellt ist.

5. Vorrichtung nach einem Ansprüche 1 bis 4, **dadurch gekennzeichnet, dass** die Sensoreinheit für das gesteuerte Unterbrechen elektronische Schaltermittel (12) aufweist, die insbesondere mittels eines Triac oder FET realisiert sind.

6. Vorrichtung nach Anspruch 5, **dadurch gekennzeichnet, dass** die elektronischen Schaltermittel so ausgebildet sind, dass, bezogen auf ein periodisches Wechselsignal der Netzspannung, in der Art einer Phasenanschnittsteuerung ein Phasenwinkel der Netzspannung den Teilstrom zum Laden der Energiespeichermittel bestimmt.

7. Vorrichtung nach einem der Ansprüche 1 bis 6, **dadurch gekennzeichnet, dass** die Sensoreinheit Sensormittel zur Bewegungs- und/oder Anwesenheitsdetektion aufweist.

8. Vorrichtung nach einem der Ansprüche 1 bis 7, **dadurch gekennzeichnet, dass** der Sensoreinheit manuell betätigbare Aktivierungsmittel zum Aktivieren der Last zugeordnet sind.

9. Vorrichtung nach einem der Ansprüche 1 bis 8, **dadurch gekennzeichnet, dass** die elektrische Last nicht-ohm'sche Leuchtmittel und/oder Entladungs-leuchtmittel und/oder Leuchtmittel mit einem elektronischen Vorschaltgerät aufweist.

10. Vorrichtung nach einem der Ansprüche 1 bis 9, **dadurch gekennzeichnet, dass** die Vorrichtung zum Einsetzen und Betreiben in eine(r) Unterputz-Schalterdose vorgesehen und ausgebildet ist.

## Claims

1. Device for sensor-controlled activation of an electrical load (10) at a twin-wire supply voltage connection (11), with a sensor unit (12, 14) arranged in the load current circuit in series with the electrical load and designed for controlled interruption of the load current circuit, as well as a power supply means (18, 20, 22) associated with the sensor unit, supplied with supply voltage, which comprises energy storage means (16) for operation of the sensor unit independent of the activation state of the electrical load,
wherein the sensor unit is adapted to activate the load over a minimum period of the activation state,
**characterised in that**
the current division means (18) are associated with the load current circuit so that, in the activation state of the load, a partial current (Iₜ) of the load current is applied for charging the energy storage means at a load unit (20, 22) associated with this, and a control unit (24) associated with the energy storage means can extend the minimum period as reaction to a predetermined electrical charge state, in particular the achievement of a load condition threshold value (L1, L2), and/or can alter a current divider ratio of the current division means for varying the partial current and/or can implement an activation of the load.

2. Device in accordance with claim 1, **characterised in that** the control unit is so adapted that the extension of the minimum period and/or the variation of the current divider ratio ensue as reaction to the achievement of a first load state threshold value (L1) and the activation of the load (10) as reaction to the achievement of a second load condition threshold value (L2) differing from the first load condition threshold value.

3. Device in accordance with claim 2, **characterised in that** second load condition threshold value corresponds to a lower electrical energy stored in the energy storage means, relative to the first load condition threshold value.

4. Device in accordance with one of the claims 1 to 3, **characterised in that** the control unit (24) is so adapted that the activation of the load (10) ensues as reaction to the predetermined electrical load condition over a predetermined charging period (T2), wherein a predetermined, in particular constant current divider ratio, is maintained during the charging period.

5. Device in accordance with one of the claims 1 to 4, **characterised in that** the sensor unit comprises electronic switching means (12) for the controlled interruptions, which are implemented in particular by a Triac or FET.

6. Device in accordance with claim 5, **characterised in that** the electronic switching means are so configured that, in relation to a periodically alternating signal of the supply voltage, a phase angle of the supply voltage determines the partial current for loading the energy storage means, in the manner of a phase angle control.

7. Device in accordance with one of the claims 1 to 6, **characterised in that** the sensor unit comprises movement and/or presence detection.

8. Device in accordance with one of the claims 1 to 7, **characterised in that** manually operable activation means are assigned to the sensor unit for activation of the load.

9. Device in accordance with one of the claims 1 to 8, **characterised in that** the electrical load comprises non-resistive lighting means and/or discharge lighting means and/or lighting means with an electronic auxiliary switching device.

10. Device in accordance with one of the claims 1 to 9, **characterised in that** the device is designed and constructed for installation and operation in a flush-mounted switchbox.

## Revendications

1. Dispositif pour l'activation commandée par capteur d'une charge électrique (10) sur un raccordement de tension du secteur à deux fils (11), avec une unité de capteur (12, 14) prévue dans le circuit de charge en série avec la charge électrique et conçue pour l'interruption commandée du circuit de charge, et des moyens formant bloc d'alimentation (18, 20, 22) associés à l'unité de capteur, qui sont alimentés par la tension de secteur et qui comportent des moyens accumulateurs d'énergie (16) pour un fonctionnement de l'unité de capteur indépendant d'un état d'activation de la charge électrique,
dans lequel l'unité de capteur est installée pour activer la charge sur une durée minimale de l'état d'activation,
**caractérisé en ce que** des moyens formant diviseur de courant (18) sont associés au circuit de charge de telle sorte que dans l'état d'activation de la charge, un courant partiel (lₜ) du courant de charge soit appliqué, pour charger les moyens accumulateurs d'énergie, à une unité de charge (20, 22) associée à ceux-ci, et qu'une unité de commande (24) associée aux moyens accumulateurs d'énergie, en réaction à un état de charge électrique prédéfini, en particulier l'arrivée à une valeur seuil d'état de charge (L1, L2), des moyens accumulateurs d'énergie, puisse prolonger la durée minimale et/ou puisse modifier un rapport de diviseur de courant des moyens formant diviseur de courant pour modifier le courant partiel et/ou puisse réaliser une activation de la charge.

2. Dispositif selon la revendication 1, **caractérisé en ce que** l'unité de commande est installée de telle sorte que le prolongement de la durée minimale et/ou la modification du rapport de diviseur de courant puissent se produire en réaction à l'arrivée à une première valeur seuil d'état de charge (L1), et l'activation de la charge (10) en réaction à l'arrivée à une deuxième valeur seuil d'état de charge (L2), différente de la première valeur seuil d'état de charge.

3. Dispositif selon la revendication 2, **caractérisé en ce que** la deuxième valeur seuil d'état de charge correspond à une énergie électrique plus faible, accumulée dans les moyens accumulateurs d'énergie, par rapport à la première valeur seuil d'état de charge.

4. Dispositif selon l'une des revendications 1 à 3, **caractérisé en ce que** l'unité de commande (24) est installée de telle sorte que l'activation de la charge (10) se produise en réaction à l'état de charge électrique prédéfini, sur un temps de charge (T2) prédéfini, dans lequel pendant le temps de charge un rapport de diviseur de courant prédéfini, en particulier constant, est réglé.

5. Dispositif selon l'une des revendications 1 à 4, **caractérisé en ce que** l'unité de capteur pour l'interruption commandée comporte des moyens commutateurs électroniques (12) qui sont réalisés en particulier à l'aide d'un triac ou d'un transistor à effet de champ.

6. Dispositif selon la revendication 5, **caractérisé en ce que** les moyens commutateurs électroniques sont conçus de telle sorte que par rapport à un signal alternatif périodique de la tension de secteur, un angle de phase de la tension de secteur définisse à la manière d'une commande par coupe le courant partiel pour charger les moyens accumulateurs d'énergie.

7. Dispositif selon l'une des revendications 1 à 6, **caractérisé en ce que** l'unité de capteur comporte des moyens formant capteur pour une détection de déplacement et/ou de présence.

8. Dispositif selon l'une des revendications 1 à 7, **caractérisé en ce que** des moyens d'activation à actionnement manuel pour activer la charge sont associés à l'unité de capteur.

9. Dispositif selon l'une des revendications 1 à 8, **caractérisé en ce que** la charge électrique comporte des lampes non ohmiques et/ou des moyens de décharge et/ou des lampes avec un ballast électronique.

10. Dispositif selon l'une des revendications 1 à 9, **caractérisé en ce que** le dispositif est prévu et conçu pour une pose et un fonctionnement dans un boîtier de commutateur encastré.
